# EUROPÄISCHE PATENTSCHRIFT

(11) **EP 1 332 069 B1**
(45) Veröffentlichungstag und Bekanntmachung des Hinweises auf die Patenterteilung: **02.09.2009**
(21) Anmeldenummer: 01988665.4
(22) Anmeldetag: 12.10.2001
(51) Int. Cl.: B60R 16/02

(54) **FEHLERMELDUNGSSYSTEM FÜR EIN FAHRZEUG**
FAULT REPORTING SYSTEM FOR A MOTOR VEHICLE
SYSTEME D'INDICATION DE DEFAUTS POUR UN VEHICULE

(30) Priorität: 21.10.2000 DE 10052307
(43) Veröffentlichungstag der Anmeldung: 06.08.2003
(73) Patentinhaber: Bayerische Motoren Werke Aktiengesellschaft, 80809 München (DE)
(72) Erfinder: WILL, Peter, 80804 München (DE)
(86) Internationale Anmeldenummer: PCT/EP2001/011808
(87) Internationale Veröffentlichungsnummer: WO 2002/034577

(56) Entgegenhaltungen:
- EP-A- 0 903 264
- EP-A- 0 949 122
- DE-A- 19 700 353
- US-A- 5 783 993

## Beschreibung

Die Erfindung betrifft ein Fehlermeldungssystem für ein Fahrzeug gemäß dem Oberbegriff des Anspruchs 1.

Herkömmlicherweise werden Fehlfunktionen im Fahrzeug jeweils durch ein bestimmtes Symbol in einem Display angezeigt. Um diese Funktion realisieren zu können, ist in einer Reihe von heutigen Fahrzeugen bereits ein zentrales Check-Control-Modul vorgesehen, welches über einen Datenbus mit verschiedenen elektrischen Steuergeräten verbunden ist. Jedem Steuergerät sind zum Teil mehrere sogenannte Bus-Identifier zugeordnet, wobei in diesen Botschaften Statusbits übertragen werden. Die von den Steuergeräten an das Check-Control-Modul übertragenen Statusbits werden dort ausgewertet und gegebenenfalls mit weiteren Daten verknüpft. Bei Vorliegen bestimmter Bedingungen wird über die Anzeige im Fahrzeug, z.B. das Kombiinstrument, eine Fehlermeldung ausgegeben. Ein derartiges Fehlermeldungssystem ist aus der EP 0903264 A gemäß Oberbegriff des Anspruchs 1 bekannt.

Nachteilig hierbei ist die geringe Flexibilität dieses Systems, da das Check-Control-Modul alle Statustelegramme kennen muß. Überdies müssen auch die Bedingungen im Check-Control-Modul abgelegt sein, bei denen Fehlermeldungen angezeigt werden sollen. Aus diesem Grund verursachen Änderungen im Bereich der Steuergeräte immer auch Änderungen im Check-Control-Modul selbst. Im übrigen werden bei einer Kommunikation über einen Datenbus für die verschiedenen Steuergeräte zum Teil mehrere Bus-Identifier benötigt, was die Komplexität des Gesamtsystems noch erhöht. Insofern steigt auch die benötigte Rechenleistung beim Check-Control-Modul proportional mit der Anzahl der benötigten Meldungen an. Im Übrigen ist die Anzahl der verfügbaren Bus-Identifier in den Bussystemen begrenzt, so dass bei der Verwendung einer Vielzahl komplexer elektrischer Steuergeräte eine Grenze hinsichtlich der anzeigbaren Meldungen erreicht ist.

Ferner werden bisher meistens nur beleuchtete Symbole in einer Anzeige zur Angabe eines Fehlers dargestellt. Bei selten aufleuchtenden Symbolen muß ein Fahrer dann meist in der Bedienungsanleitung nachschauen, da er mit dem Symbol allein - d.h. ohne Erläuterung - oft nichts anzufangen weiß.

Aufgabe der vorliegenden Erfindung ist es, ein flexibles Fehlermeldungssystem für ein Fahrzeug anzugeben, mit der auch die in zukünftigen Fahrzeugen ansteigende Anzahl von Meldungen abdeckbar ist.

Diese Aufgabe wird durch die im Anspruch 1 genannten Merkmale gelöst.

Demgemäß werden bei einem Fehlermeldungssystem der eingangs genannten Art Steuergeräte verwendet, die derart ausgebildet sind, um Meldungsbedingungen eigenständig auszuwerten und bei Vorliegen von definierten Bedingungen eine entsprechende Meldung an ein Check-Control-Modul abzugeben. Im Gegensatz zu einem herkömmlichen System werden somit nicht lediglich Statusbits an das Check-Control-Modul übertragen, welche nur den Zustand und verschiedene Fahrzeugbetriebsbedingungen beschreiben. Vielmehr wertet das Steuergerät selbständig die ihm übermittelten Meldungen aus und formuliert bei Vorliegen der definierten Bedingungen, die damit für das jeweilige Steuergerät verfügbar sein müssen, eine entsprechende Meldung an das Check-Control-Modul.

Überdies ist eine Tabelle vorgesehen, auf welche das Check-Control-Modul Zugriff hat und in der für jede Meldung von einem Steuergerät zumindest eine Information hinterlegt ist, die dann über die Anzeige dargestellt werden soll. Das Check-Control-Modul liest die der übermittelten Meldung zugeordnete Information aus der Tabelle aus und stellt diese über die Anzeige dar. Als Anzeige kann eine Kombianzeige verwendet werden, die vorzugsweise auch ein Display umfasst. Auf dem Display können verschiedenen Symbole und Textinformationen dargestellt werden. Zudem ist es noch möglich, je nach Fehler unterschiedliche Kontrollleuchten in der Kombianzeige anzusteuern.

Durch die Überprüfung der Meldungsbedingungen in den Steuergeräten selbst, müssen bei einer Übertragung der Daten über einen Datenbus nicht mehrere BusIdentifier verwendet werden. Bei den Bus-Identifiem handelt es sich im wesentlichen um Angaben, welche die Art der gerade über den Datenbus übertragenen Informationen beschreiben. Bei der vorliegenden Erfindung wäre es beispielsweise möglich, alle Fehler in einem bestimmten Datenformat zu übermitteln. Dazu wäre dann nur ein Bus-Identifier notwendig. Sobald eine Meldung mit dem für die Fehlermeldung gewählten Bus-Identifier auf dem Bus anliegt, weiss das Check-Control-Modul, dass diese Meldung eine Fehlerinformation beinhaltet und bearbeitet werden muß. Natürlich können auch mehrere Bus-Identifier für verschiedene Gruppen von Meldungen gewählt werden.

Innerhalb der jeweiligen Datenformate ist dann immer ein Fehlermeldungsteil enthalten, der eine Angabe umfaßt, die dem von einem Steuergerät aufgrund dem Vorliegen bestimmter Bedingungen detektiertem Fehler entspricht.

Die Meldung von einem Steuergerät umfaßt also vorzugsweise den Bus-Identifier sowie eine Meldungsinformation. Mit dieser Vorgehensweise gewährleistet man den Einsatz des erfindungsgemäßen Fehlermeldungssystems auch beim Betrieb einer Vielzahl von elektronischen Steuergeräten, welche zum Teil hochkomplex sind.

Durch die Verwendung einer Tabelle, in der im Wesentlichen eine Zuordnung von aus einem Steuergerät stammenden Meldungen und zugeordneten Informationen vorliegt, kann man es vermeiden, das Check-Control-Modul dann auswechseln oder bezüglich seiner Betriebsweise umprogrammieren zu müssen, wenn die Steuergeräte oder die Fehlertelegramme in den Steuergeräten verändert werden. Vielmehr genügt es, die in der Tabelle hinterlegten Informationen auszutauschen (z.B. durch Flash-Programmierung) und bei einer Änderung des Systems entsprechend anzupassen.

Eine solche Anpassung kann in einfacher Weise dadurch erfolgen, dass die Tabelle zunächst mit Hilfe einer Datenbank erstellt ist. Aus dieser Datenbank kann dann eine Quellcode-Datei und daraus eine maschinenlesbare Datei gebildet werden, die in einen Speicher, der die Tabelle beinhaltet, einprogrammiert wird.

Dabei kann ein separater Speicher für die Tabelle verwendet werden. Muss die Tabelle dann umgeschrieben werden, so braucht lediglich eine neue Tabelle in den Speicher eingelesen zu werden.

Alternativ können der Programmteil, welcher zum Betrieb des Check-Control-Moduls vorgesehen ist, und der Datenteil, welcher die Informationen der Tabelle enthält, auch integriert ausgebildet sein. In diesem Fall müssen beide Programmteile gemeinsam erstellt und in den Speicher neu eingelesen werden.

Der Speicher kann als Teil des Check-Control-Moduls selbst ausgebildet sein. Alternativ können Check-Control-Modul und Speicher gemeinsam in einem Kombinationsinstrument integriert sein. Natürlich sind auch andere Alternativen denkbar.

Die Tabelle kann für jede Meldung eine Vielzahl von Informationen in Form von Texten, Grafik-Informationen, Kontrollleuchtenaktivierungen und/oder anderen Meldeverhalten hinterlegt halten.

Durch das erfindungsgemäße Fehlermeldungssystem, insbesondere die selbstauswertenden Steuergeräte sowie die separat hinterlegte Tabelle, ist insgesamt eine extrem hohe Variabilität des Systems gegeben.

Eine Ausführungsform der folgenden Erfindung wird nachfolgend und mit Bezug auf die beiliegenden Zeichnungen näher erläutert. Die Zeichnungen zeigen in:
Figur 1 ein schematisches Blockdiagramm eines Fehlermeldungssystems gemäß der vorliegenden Erfindung und
Figur 2 eine Darstellung einer Anzeige, mit der auf Grund einer Meldung von einem Steuergerät zugehörige Informationen dargestellt sind.

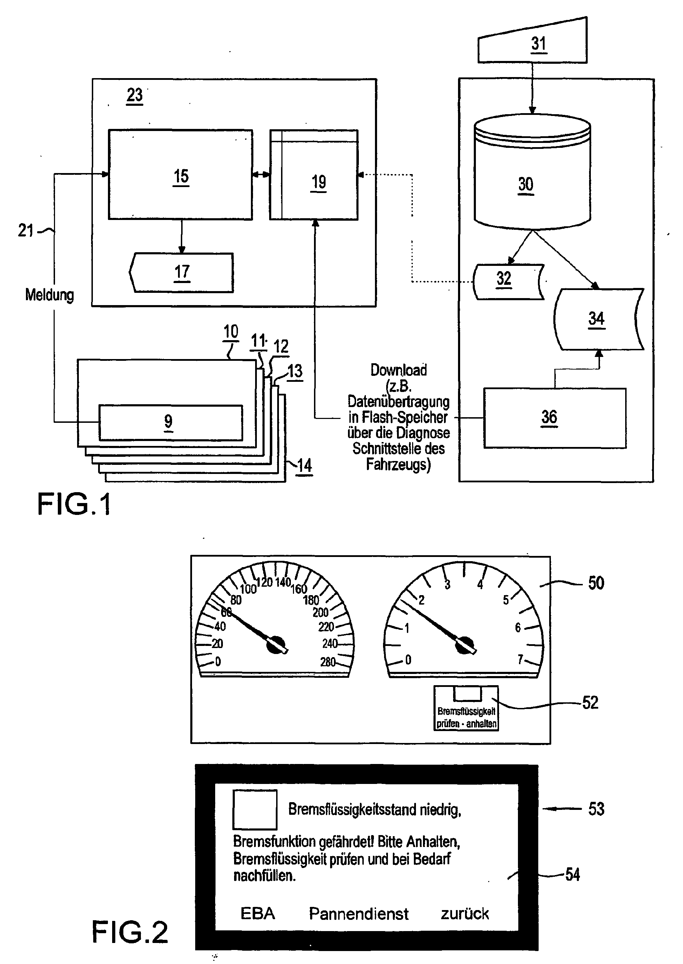

In dem schematischen Blockdiagramm der Figur 1 sind fünf Steuergeräte 10 bis 14 angedeutet, die jeweils eine Einheit 9 zur Auswertung von Meldungsbedingungen umfassen. Diese Einheiten 9 erhalten von den Steuergeräten 10 bis 14 den jeweiligen Status zur Verfügung gestellt und überprüfen die Gesamtheit der jeweils vorliegenden Information mit den für jedes Steuergerät hinterlegten Bedingungen. Natürlich können zur Beurteilung, ob diese Bedingungen erfüllt sind, auch noch andere Faktoren eingehen, die von ausserhalb des Steuergeräts eingebracht werden.

Ist eine Meldungsbedingung in einem Steuergerät 10 bis 14 erfüllt, so gibt dieses Steuergerät 10 bis 14 eine entsprechende Meldung über einen Datenbus 21 an ein Check-Control-Modul 15 ab, welches Teil eines Kombiinstruments 23 ist. Das Kombiinstrument 23 ist in einem nicht näher dargestellten Fahrzeug verbaut. Die Meldung enthält einen Bus-Identifier, welcher angibt, dass es sich vorliegend um eine Fehlermeldung handelt, und einen Datenteil, in dem eine Fehlermeldung enthalten ist.

Das Check-Control-Modul erkennt die Fehlermeldung vom Steuergerät aufgrund des Bus-Identifiers und gibt die im Datenteil enthaltene Fehlermeldung an einen Speicher weiter, in dem eine Tabelle abgelegt ist. Im weiteren wird sowohl für den Speicher als auch für die Tabelle das Bezugszeichen 19 verwendet. Die Tabelle 19 enthält für jede Fehlermeldung von irgendeinem Steuergerät 10 bis 14 zugehörige Informationen. Diese Informationen können Textausgaben, zugeordnete Grafiksymbole, Aktivierungen von Kontrolllämpchen oder sogar Meldeverhalten umfassen. Die Tabelle 19 kann jederzeit neu gestaltet und wiederum in den Speicher eingelesen werden. Damit ist diese Struktur sehr offen gewählt, da für jede Fehlermeldung neue Informationen hinterlegt, ergänzt, geändert etc. werden können. Auch können neue Fehlermeldungen ohne weiteres hinzugefügt werden.

Die einer jeweiligen Meldung zugeordneten Informationen werden an das Check-Control-Modul 15 zurück übermittelt, welches die Ausgabe der Informationen an eine Anzeige 17 veranlasst. An der Anzeige 17 können dann vorliegend Lämpchen aufleuchten oder es kann eine Ausgabe über ein Display erfolgen. Auf dem Display wiederum können auch Symbole oder Textinformationen angezeigt werden.

Eine im vorliegenden Ausführungsbeispiel verwendete Anzeige ist in Figur 2 dargestellt. Sie umfasst einerseits eine im Wesentlichen herkömmliche Kombianzeige 50, in welcher ein kleines Display 52 integriert ist. Auf dem Display 52 können Symbole und Kurzinformationen angezeigt werden, die den aus der Tabelle ausgelesenen Informationen entsprechen. Zum anderen ist ein weiterer Bildschirm 53 vorgesehen, welcher neben einem Symbol weitere, zusätzliche Textinformationen 54 darstellen kann. Die Angaben auf diesem zusätzlichen Bildschirm können abgerufen werden.

Bei besonders schwerwiegenden Fehlern erscheint die Angabe automatisch auf dem weiteren Bildschirm 53.

Auf diese Weise kann der Fahrer durch eine Darstellung in der Kombianzeige 50 zunächst auf das Vorliegen eines Fehlers aufmerksam gemacht werden. Der Fehler wird dann am Bildschirm 53, der beispielsweise im Armaturenbrett angeordnet ist, genauer erläutert.

Wie oben bereits erwähnt, läßt sich die Tabelle in hervorragender Weise mit Hilfe einer Datenbank erstellen, in der für jede Fehlermeldung die zugehörigen Meldungstexte, Meldungsverhalten oder grafische Symbole zugeordnet sind.

Nach Erstellen einer solchen Datenbank 30 beispielsweise an einem PC kann ein maschinenlesbarer Code 32 erzeugt werden, der in den Speicher 19 eingelesen werden kann.

Ebenso kann eine Quell-Datei 34 erzeugt werden, die dann in einer separaten Einheit 36 mit dem Programmteil zur Steuerung des Check-Control-Moduls verknüpft und zusammen in dieser Programm-Einheit in den Speicher 19 des Kombiinstruments 23 eingespielt wird (z.B. Flash-Programmierung über die Diagnose-Schnittstelle).

Zur Erstellung der Datenbank 30 ist eine manuelle Eingabe 31 notwendig.

Mit der vorliegenden Erfindung kann man über einen Monitor alle aktiven Check-Control-Meldungen anzeigen. Zu jeder Check-Control-Meldung kann auch ein ergänzender Handlungshinweis zur Anzeige gebracht werden. Insbesondere bei hochpriorisierten Check-Control-Meldungen können die ergänzenden Handlungshinweise automatisch aufgeblendet werden.

Da das Check-Control-Modul weder die Fehlermeldungen noch die anzuzeigenden Informationen kennen muß, kann es sehr einfach und allgemein gehalten werden. Dadurch ist es in verschiedenen Fahrzeugtypen einsetzbar. Die Anpassungen an die verschiedenen Fahrzeugtypen erfolgt lediglich durch eine Änderung bzw. durch einen Austausch der Tabelle.

Das erfindungsgemäße Fehlermeldungssystem kann eine große Anzahl von Check-Control-Meldungen verarbeiten und ist dabei in einem hohe Maße skalierbar. Ein einmal programmierter Check-Control-Algorithmus kann in unveränderter Form in verschiedenen Fahrzeugtypen zum Einsatz kommen, da die Anpassung an neue Fahrzeugtypen durch Erweiterung oder Auswechseln der Tabelle geschieht. Insbesondere ist es auch möglich, Steuergeräte nachträglich in ein Automobil einzubauen, ohne dass der Programmcode des Check-Control-Moduls geändert werden muß, da lediglich die Tabelle um einige Einträge zu erweitern ist.

## Patentansprüche

1. Fehlermeldungssystem für ein Fahrzeug mit zumindest einem elektronischen Steuergerät (10 bis 14) und einem Check-Control-Modul (15), das mit dem zumindest einen Steuergerät (10 bis 14) verbunden ist und von diesem eine Meldung erhält, sowie einer mit dem Check-Control-Modul (15) verbundenen Anzeige (17), über welche in Abhängigkeit von der übertragenen Meldung zumindest eine Information anzeigbar ist,
wobei das zumindest eine Steuergerät (10 bis 14) derart ausgebildet ist, um Meldungsbedingungen eigenständig auszuwerten und bei Vorliegen der Bedingungen eine entsprechende Meldung an das Check-Control-Modul (15) abzugeben,
**dadurch gekennzeichnet,**
**dass** eine Tabelle (19) vorgesehen ist, in der für jede Meldung die zumindest eine Information hinterlegt ist, dass das Check-Control-Modul (15) mit der Tabelle (19) verbunden ist, das die zumindest eine der Meldung zugeordnete Information aus der Tabelle ausliest und über die Anzeige (17) darstellt, und
die Anpassung an einen anderen Fahrzeugtyp durch eine Erweiterung oder ein Auswechseln der Tabelle erfolgt.

2. Fehlermeldungssystem nach Anspruch 1,
**dadurch gekennzeichnet,**
**dass** die Meldungen in einem definierten Datenformat vorliegen.

3. Fehlermeldungssystem nach Anspurch 2,
**dadurch gekennzeichnet,**
**dass** jedes Datenformat einen Datenformat-Identifier und eine Meldungsinformation enthält.

4. Fehlermeldungssystem nach einem der vorhergehenden Ansprüche,
**dadurch gekennzeichnet,**
**dass** die Tabelle (19) für jede Meldung Texte, Graphikinformationen, Kontrollleuchtenaktivierungen und/oder Meldungsverhalten hinterlegt hat.

5. Fehlermeldungssystem nach einem der vorhergehenden Ansprüche,
**dadurch gekennzeichnet,**
**dass** ein Speicher vorgesehen ist, in dem die Tabelle (19) in maschinenlesbarer Form hinterlegt ist.

6. Fehlermeldungssystem nach Anspruch 5,
**dadurch gekennzeichnet,**
**dass** die Tabelle (19) in den Speicher einlesbar ist.

7. Fehlermeldungssystem nach einem der Ansprüche 1 bis 4,
**dadurch gekennzeichnet,**
**dass** ein Speicher vorgesehen ist, in dem die Tabelle (19) und ein das Check-Control-Modul (15) steuernde Programm gemeinsam hinterlegt sind.

8. Fehlermeldungssystem nach Anspruch 7,
**dadurch gekennzeichnet,**
**dass** die Tabelle (19) und das Programm gemeinsam in den Speicher einlesbar sind.

9. Fehlermeldungssystem nach einem der Ansprüche 5 bis 8,
**dadurch gekennzeichnet,**
**dass** der Speicher im Check-Control-Modul integriert ist.

10. Fehlermeldungssystem nach einem der Ansprüche 5 bis 8,
**dadurch gekennzeichnet,**
**dass** der Speicher wie auch das Check-Control-Modul (15) in einem Kombinations-Instrument (23) integriert sind.

11. Fehlermeldungssystem nach einem der vorhergehenden Ansprüche,
**dadurch gekennzeichnet,**
**dass** die Tabelle (19) mit Hilfe einer Datenbank (30) erstellt ist.

## Claims

1. A fault reporting system for a vehicle with at least one electronic control device (10 to 14), and a check-control module (15), which is connected to the at least one control device (10 to 14) and receives a report from the latter, and a display (17) which is connected to the check-control module (15), and by means of which at least one piece of information can be displayed as a function of the transmitted report, wherein the at least one control device (10 to 14) is configured to independently evaluate report conditions and, if the conditions are present, to emit a corresponding report to the check-control module (15), **characterised in that** a table (19) is provided, in which for each report, the at least one piece of information is stored, **in that** the check-control module (15) is connected to the table (19) and reads at least one piece of information associated with the report from the table and shows it by means of the display (17), and the adaptation to a different type of vehicle takes place by an extension or an exchanging of the table.

2. A fault reporting system according to claim 1, **characterised in that** the reports are present in a defined data format.

3. A fault reporting system according to claim 2, **characterised in that** each data format contains a data format identifier and a piece of report information.

4. A fault reporting system according to any one of the preceding claims, **characterised in that** the table (19) has stored for each report, texts, graphic information, control light activations and/or report actions.

5. A fault reporting system according to any one of the preceding claims, **characterised in that** a memory is provided, in which the table (19) is stored in machine-readable form.

6. A fault reporting system according to claim 5, **characterised in that** the table (19) can be read into the memory.

7. A fault reporting system according to any one of claims 1 to 4, **characterised in that** a memory is provided, in which the table (19) and a programme controlling the check-control module (15) are stored together.

8. A fault reporting system according to claim 7, **characterised in that** the table (19) and the program can be read together into the memory.

9. A fault reporting system according to any one of claims 5 to 8, **characterised in that** the memory is integrated in the check-control module.

10. A fault reporting system according to any one of claims 5 to 8, **characterised in that** the memory and also the check-control module (15) are integrated in a combination instrument (23).

11. A fault reporting system according to any one of the preceding claims, **characterised in that** the table (19) is set up with the aid of a database (30).

## Revendications

1. Système de signalement de défaut d'un véhicule comportant au moins un appareil de commande électronique (10 à 14) et un module de contrôle et de vérification (15) relié à au moins un appareil de commande (10 à 14) et recevant un message de celui-ci ainsi qu'un afficheur (17) relié au module de contrôle et de vérification (15) qui, en fonction du message transmis, affiche au moins une information,
au moins un appareil de commande (10 à 14) est réalisé pour exploiter lui-même les conditions de signalement et, en présence des conditions de signalement, il émet un message correspondant au module de contrôle et de vérification (15),
**caractérisé par**
- un tableau (19) dans lequel est enregistrée au moins une information pour chaque message,
- le module de contrôle et de vérification (15) est relié au tableau (19) pour lire au moins une information associée au message dans le tableau et la présenter par l'afficheur (17), et
- l'adaptation se fait à un autre type de véhicule par une extension ou par un changement de tableaux.

2. Système de signalement selon la revendication 1,
**caractérisé en ce que**
les messages sont disponibles dans un format défini de données.

3. Système de signalement selon la revendication 2,
**caractérisé en ce que**
chaque format de données contient un identificateur de format de données et une information de message.

4. Système de signalement selon les revendications précédentes,
**caractérisé en ce que**
pour chaque message, le tableau (19) contient l'enregistrement de textes, d'informations graphiques, d'activations de voyants de contrôle et/ou de comportements de signalement.

5. Système de signalement selon les revendications précédentes,
**caractérisé par**
une mémoire dans laquelle est enregistré le tableau (19) sous une forme lisible par une machine.

6. Système de signalement selon la revendication 5,
**caractérisé en ce que**
le tableau (19) est enregistré dans la mémoire.

7. Système de signalement selon les revendications 1 à 4,
**caractérisé par**
une mémoire dans laquelle sont enregistrés en commun le tableau (19) et le programme de commande du module de contrôle et de vérification (15).

8. Système de signalement selon la revendication 7,
**caractérisé en ce que**
le tableau (19) et le programme sont enregistrés en commun dans la mémoire.

9. Système de signalement selon les revendications 5 à 8,
**caractérisé en ce que**
la mémoire est intégrée dans le module de contrôle et de vérification.

10. Système de signalement selon les revendications 5 à 8,
**caractérisé en ce que**
la mémoire et le module de contrôle et de vérification (15) sont intégrés dans un combiné d'instruments (23).

11. Système de signalement selon les revendications précédentes,
**caractérisé en ce que**
le tableau (19) est établi à l'aide d'une banque de données (30).
